Europäisches Patentamt

European Patent Office

Office européen des brevets

(19)

(11) EP 1 153 042 B1

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(21) Anmeldenummer: **00916827.9**

(22) Anmeldetag: **10.02.2000**

(51) Int Cl.:
**C08F 2/22** (2006.01)

(86) Internationale Anmeldenummer:
**PCT/EP2000/001091**

(87) Internationale Veröffentlichungsnummer:
**WO 2000/047632 (17.08.2000 Gazette 2000/33)**

(54) **VERFAHREN ZUR KONTINUIERLICHEN ÜBERWACHUNG UND STEUERUNG DES MONOMERENUMSATZES BEI DER EMULSIONSPOLYMERISATION**

METHOD FOR CONTINUOUSLY MONITORING AND CONTROLLING THE MONOMER CONVERSION DURING EMULSION POLYMERIZATION

PROCEDE DE CONTROLE ET DE COMMANDE CONTINUS DE CONVERSION DE MONOMERES LORS DE LA POLYMERISATION EN EMULSION

(84) Benannte Vertragsstaaten:
**AT BE CH CY DE DK ES FI FR GB GR IE IT LI LU MC NL PT SE**

(30) Priorität: **11.02.1999 DE 19905712**

(43) Veröffentlichungstag der Anmeldung:
**14.11.2001 Patentblatt 2001/46**

(73) Patentinhaber: **BASF Aktiengesellschaft**
**67056 Ludwigshafen (DE)**

(72) Erfinder:
• **KRÖNER, Hubertus**
**D-67435 Neustadt (DE)**
• **KLOSTERMANN, Rainer**
**D-68775 Ketsch (DE)**
• **BIRK, Joachim**
**D-67117 Limburgerhof (DE)**
• **HAUFF, Thomas**
**D-67117 Limburgerhof (DE)**

(74) Vertreter: **Kinzebach, Werner et al**
**Patentanwälte,**
**Reitstötter, Kinzebach & Partner,**
**Ludwigsplatz 4**
**67059 Ludwigshafen (DE)**

(56) Entgegenhaltungen:
**DE-A- 2 061 444          US-A- 3 991 258**

**Beschreibung**

Die vorliegende Erfindung betrifft ein Verfahren zur on-line-Überwachung und Steuerung des Monomerenumsatzes bei der Emulsionspolymerisation in einem Reaktor, insbesondere bei semi-kontinuierlichen und kontinuierlichen Emulsionspolymerisationsprozessen im industriellen Maßstab.

Sicherheitsaspekte spielen im Produktionsprozeß in der chemischen Industrie eine herausragende Rolle. Üblicherweise werden daher chemische Produktionsprozesse ständig überwacht, um mögliche Gefahrenzustände, die etwa zu Explosionen oder zur Freisetzung von Chemikalien führen können, zu vermeiden.

Viele chemischen Reaktionen, wie beispielsweise die Emulsionspolymerisation, verlaufen exotherm und sind daher mit der Freisetzung von Wärme verbunden. Wenn aus einem solchen Reaktionssystem weniger Wärme abgeführt wird als durch die Umsetzung der Ausgangsmaterialien entsteht, kann es durch einen resultierenden Temperaturanstieg im System zu einer sich selbst beschleunigenden Reaktion kommen. Man spricht hier auch von einem "Durchgehen" der Reaktion. In einem geschlossenen Reaktorsystem ist mit einer Temperaturerhöhung auch ein Anstieg des Reaktorinnendrucks verbunden.

Ein Reaktor für exotherme chemische Reaktionen besitzt daher neben Kühleinrichtungen zur effizienten Wärmeabfuhr auch spezielle Sicherheitseinrichtungen zur Druckentlastung, wie beispielsweise Sicherheitsventile oder spezielle Auffangeinrichtungen (sogenannte "catch tank"-Systeme), die eine Schnellentleerung des Reaktorinhalts in einen Sicherheitskessel ermöglichen. Als sicherheitstechnisches Grunderfordernis ist die Prozeßführung stets so auszulegen, daß die Sicherheitseinrichtungen selbst unter ungünstigsten Bedingungen, d.h. bei einem spontanen, adiabaten Durchgehen des sich im Reaktor befindlichen Reaktionsgemisches, nicht ansprechen. Zu Verwirklichung dieses Grundsatzes ist üblicherweise eine durch die Prozeßleittechnik gestützte Reaktionsüberwachung vorgesehen, deren wesentliche Aufgabe es ist, zu jedem Zeitpunkt der Reaktion im laufenden Prozeß die Sicherheit des Prozesses zu gewährleisten und das Prozeßrisiko zu begrenzen.

Bisherige Reaktionsüberwachungen basierten zumeist auf festen apparatebedingten und rezepturunabhängigen Grenzwerten für Zulaufmengen und/oder -geschwindigkeiten der Ausgangsstoffe und auf der Überwachung von Temperaturdifferenzen.

Diese festen Grenzwerte bedingen sehr große einzuhaltende Sicherheitsmargen; eine Optimierung der Prozeßführung unter wirtschaftlichen Aspekten ist bei derartigen Konzepten nur in engen Grenzen möglich.

Zur Optimierung der Raum-Zeit-Ausbeute unter Beibehaltung der Anlagensicherheit ist es jedoch notwendig, diese starren Grenzwerte durch flexiblere, auf aktuellen Messungen während der laufenden Reaktion beruhenden Grenzwerten zu ersetzen.

Bei der Emulsionspolymerisation werden die Einsatzstoffe (im wesentlichen Monomere, Emulgatoren, Wasser, Initiatoren und Stabilisatoren) in einer vorgegebenen Dosierstrategie in den Reaktor eingeleitet, wo die emulgierten Monomertröpfchen unter Wärmefreisetzung zu Polymerteilchen umgesetzt werden.

Eine kontinuierliche Reaktionsüberwachung besteht bei der Emulsionspolymerisation daher im wesentlichen aus zwei Elementen:

- Überwachung des Durchgehens der Reaktion durch Alarmierung bei Überschreiten eines bestimmten Maximalwerts der Reaktorinnentemperatur; und
- Überwachung/Alarmierung bei Monomerenakkumulation.

Mit einer Monomerenakkumulation im Reaktor ist zunächst die Gefahr eines Einschlafens der Reaktion verbunden. Gleichzeitig stellt eine Monomerenakkumulation jedoch auch ein unkalkulierbares Sicherheitsrisiko dar, falls es zu einem adiabaten Durchgehen des Reaktionsgemisches kommt. Für eine zuverlässige Reaktionsüberwachung ist es daher erforderlich, die durch akkumulierte Monomere im Reaktor vorhandene, noch nicht freigesetzte Reaktionsenthalpie zu jedem Zeitpunkt genau zu kennen.

Es sind bereits verschiedene Verfahren zur Kontrolle der Monomerenakkumulation bekannt.

Bei der sogenannten "de Haas'schen"-Reaktionsüberwachung wird die Stellung der Regelventile für die Dampf- bzw. Kühlwasserversorgung des Temperierbades des Reaktors überwacht. Diese Variante hat den Vorteil, daß sie relativ einfach zu realisieren ist. Sie benützt bereits für die Steuerung der Reaktion vorhandene Meß- und Regelinstrumente. Allerdings kann diese Methode aus diesem Grund nicht als Schutzeinrichtung der Anforderungklasse 5 (DIN 19250 bzw. SIL III nach IEC 61508) verwendet werden. Darüber hinaus können bestimmte Effekte wie Reaktorfouling oder eine Verschlechterung der Temperaturabfuhr bei ansteigender Viskosität des Reaktionsgemisches nicht berücksichtigt werden. Auch die bei Durchgehen des Reaktionsgemisches auftretende Erhöhung des Reaktorinnendrucks wird nicht berücksichtigt. Diese Art der Reaktionsüberwachung stößt außerdem bei Reaktionen, die mit einer komplexeren Regelstrategie ausgestattet sind, an ihre Grenzen.

Als weiteres verfahren zur Kontrolle der Monomerenakkumulation ist bekannt, die Mindestvorlagemenge an Inertem (etwa an vollentsalztem Wasser) und die maximale Durchflußmenge für den Monomerenzulauf zu kontrollieren.

Dieses Überwachungsverfahren erlaubt jedoch nur eine relativ eingeschränkte Flexibilität bezüglich der Rezepturen und der Fahrweise des Reaktors. Sie ist für sich allein nicht ausreichend, um das Anspringen der Reaktion oder ein Einschlafen der Reaktion zu kontrollieren und muß daher mit organisatorischen Maßnahmen und gegebenenfalls der "de Haas'schen"-Reaktionsüberwachung kombiniert werden. Auch bei diesem Verfahren werden möglicherweise auftretende Drücke nicht explizit berücksichtigt. Unter wirtschaftlichen Aspekten ist dieses Verfahren ungünstig, da aufgrund der starren Mengengrenzwerte relativ große Sicherheitsmargen berücksichtigt werden müssen.

Ein weiteres bekanntes Verfahren besteht darin, die Temperaturdifferenz zwischen Reaktorinnentemperatur und Reaktorbadtemperatur nach Erreichen einer "worst case"-Menge zu überwachen. Die "worst case"-Menge ist die Monomerenmenge, die maximal ohne Auftreten einer Polymerisationsreaktion in den Reaktor laufen darf und beim Durchgehen der Reaktion immer noch zu innerhalb der Sicherheitsmargen liegenden Bedingungen führt. Die "worst case"-Menge kann modellgestützt auf Basis gemessener Durchflüsse bestimmt werden. Die Berechnung erfolgt dann durch eine vereinfachte Wärmebilanz, die nur die zugeführten Wärmeströme berücksichtigt. Auch hier werden jedoch die bei einem Durchgehen möglicherweise auftretenden Drücke nicht explizit berücksichtigt. Durch die Überwachung eines starren Grenzwertes für die Temperaturdifferenz zwischen Reaktorinnentemperatur und Reaktorbad werden die Einflüsse des Reaktorfoulings und der Viskosität nicht berücksichtigt. Außerdem ist dieses Verfahren für Reaktoren mit erweiterten Kühlmöglichkeiten wie außenliegenden Wärmetauschern oder Rückflußkühlern nur bedingt anwendbar.

Aufgabe der vorliegenden Erfindung ist es daher, ein verbessertes Verfahren zur on-line-Überwachung und Steuerung des Monomerenumsatzes bei der Emulsionspolymerisation anzugeben, welches bei unverändert hoher Anlagensicherheit eine wirtschaftlichere Prozeßführung ermöglicht und insbesondere auch für Reaktoren mit erweiterten Kühlmöglichkeiten und bei Prozessen mit komplexen Regelstrategien anwendbar ist.

Gelöst wird diese Aufgabe durch das Verfahren gemäß vorliegendem Anspruch 1. Das erfindungsgemäße Verfahren ist dadurch gekennzeichnet, daß man

a) einen Initialisierungszeitpunkt $t_0 = 0$ wählt und dem Reaktor für diesen Zeitpunkt einen bestimmten ursprünglichen Wärmeinhalt $Q_0$ zuordnet,
b) ab dem Initialisierungszeitpunkt kontinuierlich die dem Reaktor zugeführte Wärmemenge $Q_{IN}$, die zugeführte Reaktionsenthalpie $Q_{RE}$ und die aus dem Reaktor abgeführte Wärmemenge $Q_{OUT}$ bestimmt,
c) die nicht abgeführte Wärmemenge $Q_{AD}$ gemäß folgender Bilanz berechnet

$$Q_{AD}(t) = Q_0 + Q_{IN}(t) + Q_{RE}(t) - Q_{OUT}(t),$$

d) aus der nicht abgeführten Wärmemenge $Q_{AD}(t)$ und der momentanen Innentemperatur $T(t)$ des Reaktors die im Fall einer spontanen adiabaten Reaktion maximal auftretende Innentemperatur $T_{AD}$ berechnet, und,
e) wenn die berechnete maximale Innentemperatur $T_{AD}$ die momentane Innentemperatur $T(t)$ des Reaktors um einen bestimmten Wert übersteigt; Maßnahmen einleitet, die ein weiteres Ansteigen der nicht abgeführten Wärmemenge $Q_{AD}$ verhindern.

Erfindungsgemäß wird also vorgeschlagen, die Überwachung der Monomerenakkumulation durch Einführung einer erweiterten wärmebilanz unter Berücksichtigung der abgeführten Wärmemengen zu verbessern. Die das aktuelle Gefahrenpotential darstellende nicht abgeführte Wärmemenge $Q_{AD}$ kann genauer bestimmt und gewisse, für die Reaktorsicherheit relevante Größen, wie die maximale adiabate Innentemperatur $T_{AD}$ des Reaktors, können präziser berechnet werden. Die vor einem Ansprechen von Sicherheitsventilen oder der Auffangeinrichtungen für den Reaktorinhalt einzuhaltenden Sicherheitsmargen können daher besser ausgenutzt werden. Durch die laufende Bestimmung des momentanen Umsatzes und des aktuellen Gefahrenpotentials können Zulaufgeschwindigkeiten angepaßt und die Raum-Zeit-Ausbeute optimiert werden. Die erfindungsgemäß vorgeschlagene Wärmebilanzierung kann auch bei Reaktoren mit außenliegenden Wärmetauschern oder Rückflußkühlern durchgeführt werden, da diese technisch einfach in die Bilanzierung einbezogen werden können. Es müssen auch keine starren Grenzwerte für die maximale Zulaufgeschwindigkeit oder maximale Mengen von Ausgangskomponenten eingehalten werden. Ebenso sind keine starren Grenzwerte für Temperaturdifferenzen zwischen Reaktorinnenraum und Bad mehr notwendig. Durch die kontinuierliche Messung der tatsächlich abgeführten Wärmemenge erhält man außerdem Hinweise auf Reaktorfouling oder Viskositätsveränderungen.

Es sind unterschiedlichste Maßnahmen denkbar, mit denen man ein Ansteigen der nicht-abgeführten Wärmemenge verhindern kann. Bevorzugt kommen eine oder mehrere der folgenden Maßnahmen in Frage:

- Drosseln der Monomerenzufuhr,

- Verstärken der Reaktorkühlung, beispielsweise über das Reaktorbad oder über einen Rückflußkühler,
- Erhöhung der Initiatorzugabe zur besseren Umsetzung der akkumulierten Monomere.

Da sich diese Maßnahmen teilweise auch auf die Produktqualität auswirken können, wird man je nach Fall bestimmte, durch die einzuhaltenden Vorgaben beeinflußte Eingriffsstrategien wählen.

Vorteilhaft werden die zugeführte Wärmemenge, die Reaktionsenthalpie und die aus dem Reaktor abgeführte Wärmemenge mittels Temperatur- und Durchflußmengenmessungen in den Zu- und Abläufen des Reaktors sowie in den Kühlmittelkreisläufen bestimmt. Für Temperatur- und Durchflußmengenmessungen sind zuverlässige und preiswerte Meßsysteme, kommerziell erhältlich. Bei Kenntnis der spezifischen wärmekapazitäten der Einsatzstoffe lassen sich die Wärmeströme leicht berechnen. Mit dem erfindungsgemäßen Verfahren sind also keine größeren Investitionen verbunden. Das Verfahren kann auch leicht in bereits existierenden Anlagen implementiert werden.

Besonders bevorzugt wird außerdem der bei der maximalen Innentemperatur $T_{AD}$ in dem Reaktor herrschende maximale Innendruck $p_{AD}$ berechnet. Gemäß dieser bevorzugten Variante des erfindungsgemäßen Verfahrens wird auch der im Fall eines adiabaten Durchgehens des Reaktorgemisches auftretende maximale Reaktorinnendruck als zusätzliches Sicherheitskriterium herangezogen, so daß sich eine gegenüber herkömmlichen Überwachungsverfahren erhöhte Anlagensicherheit ergibt. Man leitet daher vorteilhaft Maßnahmen ein, die ein weiteres Ansteigen der nicht abgeführten Wärmemenge $Q_{AD}$ verhindern, wenn entweder die berechnete maximale Innentemperatur $T_{AD}$ oder der berechnete maximale Innendruck $p_{AD}$ die entsprechenden gemessenen Momentanwerte in einem bestimmten Ausmaß übersteigen. Diese erfindungsgemäße Variante ist besonders bevorzugt, weil es bei einer Störung im Reaktionsablauf meist eher zu einer Überschreitung von $p_{AD}$ als von $T_{AD}$ kommt. Vorteilhaft wird eine weitere Zufuhr von Monomeren in den Reaktor vollständig verhindert, wenn die berechnete maximale Innentemperatur $T_{AD}$ und/oder der berechnete maximale Innendruck $p_{AD}$ vorgegebene, reaktorspezifische Grenzwerte überschreiten. Als Grenzwerte für die Reaktionsüberwachung können die Auslegungstemperatur des Reaktors oder der Auslegungsdruck des Reaktors oder eines gegebenenfalls vorhandenen Sicherheitsventils unter Berücksichtigung der Fehlertoleranzen der Berechnung herangezogen werden. Mit dem Unterbrechen des Monomerenzulaufs wird auch keine Reaktionsenthalpie mehr in den Reaktor geführt, so daß die im Reaktor herrschenden Bedingungen stets innerhalb der vorgegebenen Toleranzen liegen. Bei fortgesetzter Kühlung des Reaktors wird dann Wärme effektiv abgeführt und nach einer gewissen Kühlzeit kann gegebenenfalls der Zulauf wieder geöffnet werden.

Als Initialisierungszeitpunkt für das erfindungsgemäße verfahren wählt man bevorzugt einen Zeitpunkt, bei dem der Reaktor vollständig entleert ist und ordnet diesen Zeitpunkt dem ursprünglichem Wärmeinhalt $Q_0 = 0$ zu.

Diese Initialisierung kann manuell durch das Bedienungspersonal durchgeführt werden. Zur Vermeidung von Bedienungsfehlern wird man jedoch die Initialisierung bevorzugt automatisch durchführen, beispielsweise kann nach Öffnen des Ablaßventils für einen bestimmten Mindestzeitraum davon ausgegangen werden, daß der Reaktor vollständig entleert ist, so daß man diesem Zeitraum eine Initialisierung automatisch erfolgen kann. Das Entleeren des Reaktors kann jedoch auch über im Reaktor angeordnete Füllstand-Meßfühler registriert werden. Das Initialisierungskriterium eines vollständig entleerten Reaktors kann auch durch Messung der Menge des aus dem Reaktor herausgelaufenen Reaktionsmediums und Bilanzierung mit der vorher in den Reaktor zudosierten Menge registriert werden.

Mit dem erfindungsgemäßen Verfahren der Wärmebilanzierung ist außerdem eine Überwachung des momentanen Umsatzes der Reaktionsmischung und eine Validierung der zugeführten Reaktanten durch Berechnung des Reaktordrucks und Vergleich mit dem tatsächlich vorliegenden Reaktordruck möglich. Vorzugsweise wird man daher zur Validierung des Überwachungsverfahrens den tatsächlichen Reaktorinnendruck $p(t)$ messen und die Einhaltung der Relation

$$p(t) \leq p_{calc}(t)$$

kontinuierlich überprüft, wobei $p_{calc}$ der aus der momentanen Reaktorinnentemperatur berechnete Druck ist.

Bei Installation der Reaktionsüberwachung als Schutzeinrichtung werden vorzugsweise Temperaturen, Drücke und Durchflußmengen wenigstens teilweise redundant gemessen und durch gegenseitigen Vergleich der redundanten Größen eine kontinuierliche Validierung der Eingangsgrößen durchgeführt.

Besonders vorteilhaft ist das erfindungsgemäße Überwachungsverfahren bei einem semi-kontinuierlichen Emulsionspolymerisationsverfahren einsetzbar. Im Fall eines kontinuierlichen Polymerisationsverfahrens ist in die Wärmebilanzierung auch die mit dem abfließenden Polymerisat abgeführte Wärmemenge zu berücksichtigen.

Für eine zuverlässige Reaktionsüberwachung durch die erfindungsgemäß vorgeschlagene Wärmebilanzierung ist von besonderer Bedeutung, daß der Reaktor während der laufenden Reaktion möglichst gut durchmischt ist und die Monomere gleichmäßig abreagieren. Vorzugsweise wird daher auch der Betrieb des Reaktorrührers kontinuierlich überwacht. Ein gleichmäßiges Abreagieren der Monomere kann bei der Emulsionspolymerisation durch die Zulauffahrweise sichergestellt werden.

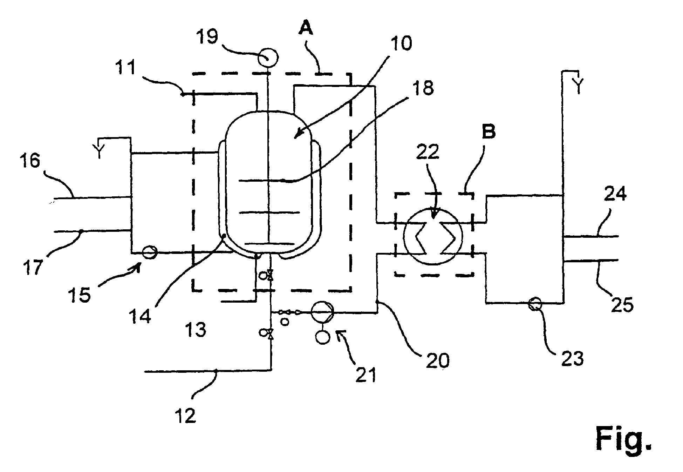

Das erfindungsgemäße Verfahren wird im folgenden unter Bezugnahme auf einen in der beigefügten Zeichnung schematisch dargestellten Polymerisationsreaktor ausführlicher erläutert.

In der Zeichnung erkennt man einen Reaktorkessel 10, der Zuläufe 11 für Einsatzstoffe wie Monomere, Emulgatoren, Wasser, Initiatoren, Stabilisatoren und weitere Hilfsstoffe aufweist. Der Kessel kann über eine Leitung 12 entleert werden. In den Kessel kann über eine Leitung 13 Wärme in Form von Dampf zugeführt werden. Der Reaktorkessel 10 ist von einem Temperiermantel 14 umgeben, der in einem über eine erste Kreiswasserpumpe 15 betriebenen Wasserkreislauf temperiert wird. Eine erste Dampfleitung 16 und eine erste Kühlwasserleitung 17 erlauben wiederum die Regelung der Temperatur des Kühlwasserkreislaufs. Im Kessel 10 ist ein Rührer 18 angeordnet, dessen Welle nach oben aus dem Kessel herausgeführt ist und von einem Motor 19 angetrieben wird. Im dargestellten Beispiel erkennt man außerdem einen Produktumlaufkreislauf 20, durch den das im Kessel befindliche Reaktionsmedium mit Hilfe einer Produktsumwälzpumpe 21 durch einen außenliegenden Wärmetauscher 22 geführt wird. Als wärmeaustauschmedium im außenliegenden Wärmetauscher 22 wird Wasser verwendet, das mit Hilfe einer zweiten Kreiswasserpumpe 23 in einem Kreislauf geführt und über eine zweite Dampfleitung 24 und eine zweite Kühlwasserleitung 25 temperiert wird. Der Temperiermantel 14 des Reaktors oder der außenliegende wärmetauscher 22 können statt durch den dargestellten Kühlkreislauf auch direkt durch Kühlwasser aus den Leitungen 17 bzw. 25 gekühlt werden. Neben Wasser als bevorzugtem Kühlmedium für den Reaktorkessel und den außenliegenden Wärmetauscher sind selbstverständlich auch andere Kühlmedien denkbar, wie etwa eine Kühlsole oder ähnliches. Dies gilt besonders dann, wenn das über die Leitungen 17 bzw. 25 zugeführte Kühlmedium aus einem Sekundärkreislauf stammt.

Idealerweise versucht man, die zu einem bestimmten Zeitpunkt im Reaktor befindliche nicht abgeführte Wärmemenge $Q_{AD}$ aus den kumulierten zu- und abgeführten Wärmemengen möglichst exakt zu berechnen. In der Praxis zeigt sich jedoch, daß es ausreichend ist, lediglich die wichtigsten Wärmeströme zu berücksichtigen und kleinere Wärmebeiträge, die darüberhinaus nur aufwendig gemessen werden können, unberücksichtigt zu lassen. Im dargestellten Beispiel wird bei der praktischen Realisierung des erfindungsgemäßen Verfahrens mit zwei Teilbilanzräumen gearbeitet, die in der Figur durch die gestrichelten und mit "A" bzw. "B" bezeichneten Rechtecke schematisch dargestellt sind. Danach umfaßt der erste Teilbilanzraum A den Polykessel und sein Bad, während der zweite Teilbilanzraum B den außenliegenden Wärmetauscher sowie dessen Kühlkreislauf umfaßt. Wird beispielsweise in einer anderen Reaktorkonfiguration ein Rückflußkühler anstelle des außenliegenden Wärmetauschers verwendet, so kann man dessen Wärmeströme in einem eigenen Teilbilanzraum erfassen.

Die Bilanzraumgrenzen sind so gewählt, daß die Zu- und Abläufe der jeweiligen Bäder den Bilanzraum durchstoßen und die zugehörigen Kreiswasserpumpen und die Zuführungen von Dampf bzw. Kühlwasser außerhalb des Bilanzraums liegen. An den Bilanzraumgrenzen werden Temperatur und Durchflußmenge der Zu- und Abläufe gemessen. Damit kann indirekt auch der geringe Wärmeeintrag der außerhalb der Bilanzraumgrenzen liegenden Umwälzpumpen 15, 21 und 23 berücksichtigt werden.

Sofern einzelne Zulaufströme vor dem Einbringen in den Polymerisationskessel gemischt werden, liegen diese Mischstrecken bevorzugt ebenfalls außerhalb des Bilanzraums.

Zur Berechnung der nicht-abgeführten Wärmemenge $Q_{AD}$ wird zunächst der Wärmeinhalt $Q_0$ bei völlig entleertem Kessel gleich Null gesetzt. Sodann wird die Bilanzierung initialisiert und die nicht abgeführte Wärmemenge $Q_{AD}$, die bei einem spontanen adiabaten Durchgehen des Reaktionsgemisches zum Ansteigen der Reaktortemperatur und des Reaktorinnendrucks führen würde, wie folgt berechnet:

$$Q_{AD}(t) = Q_{IN}(t) + Q_{RE}(t) - Q_{OUT}(t)$$

Zu einem gegebenen Zeitpunkt t ergibt sich die nicht abgeführte Wärmemenge wird also als Differenz der bis zu diesem Zeitpunkt dem Reaktor zugeführten Wärmemenge $Q_{IN}$ und der aus dem Reaktor abgeführten Wärmemenge $Q_{OUT}$ zuzüglich der durch den Monomerenzufluß eingetragenen Reaktionsenthalpie $Q_{RE}$.

Für den in der Figur dargestellten Prozeß werden vorteilhaft folgende Wärmeströme berücksichtigt.

$$Q_{AD}(t) = \int_0^t \dot{Q}_{RE}\, dt + \int_0^t \dot{Q}_D\, dt - \left[ \int_0^t \dot{Q}_B\, dt + \int_0^t \dot{Q}_{AWT}\, dt + \int_0^t \dot{Q}_{ZU}\, dt + \int_0^t \dot{Q}_H\, dt \right]$$

Dabei ist

$$\int_0^t \dot{Q}_{RE}\, dt \qquad \text{die durch die Monomere zugeführte Reaktionsenthalpie;}$$

$$\int_0^t \dot{Q}_D\, dt \quad Q_D dt \qquad \text{die Wärmemenge, die durch Direktdampf eingebracht wird;}$$

$$\int_0^t \dot{Q}_B\, dt \quad Q_B dt \qquad \text{die über das Bad des Reaktors abgeführte Wärmemenge;}$$

$$\int_0^t \dot{Q}_{AWT}\, dt \quad Q_{AWT} dt \qquad \text{die über den außenliegenden Wärmetauscher abgeführte Wärmemenge;}$$

$$\int_0^t \dot{Q}_{ZU}\, dt \quad Q_{ZU} dt \qquad \text{die Kühlkapazität zuflaufenden Einsatzstoffe;}$$

$$\int_0^t \dot{Q}_H\, dt \quad Q_H dt \qquad \text{die Wärmemenge, die zum Heizen/Kühlen des Reaktorinhalts verwendet wird.}$$

Nicht berücksichtigt wird hier beispielsweise die Wärmemenge, die zum Aufheizen oder Kühlen des Reaktorbehälters selbst benötigt bzw. frei wird, die Wärmemenge, die vom Rührer eingetragen wird und die Wärmemenge, die an die Umgebung durch Abstrahlen und Konvektion abgegeben wird.

Die Wärmemengen werden jeweils auf Basis von Meßwerten von Temperaturen bzw. Temperaturdifferenzen und Durchflußmengen in einem bestimmten Zeitintervall $\Delta t$, sowie der spezifischen Wärmekapazitäten der beteiligten Stoffe ermittelt. Ein typisches Zeitintervall liegt bei einer Reaktionsdauer von mehr als einer Stunde vorzugsweise im Bereich von 1 bis 10 Sekunden.

Der zum Zeitpunkt t mögliche adiabate Temperaturhub $\Delta T_{AD}$ bzw. Druckhub $\Delta p_{AD}$ wird aus $Q_{AD}$ berechnet. Anstelle der Integration erfolgt eine numerische Summierung. Dazu wird der Zeitraum vom Beginn der Messung (*t=0*) bis zum Zeitpunkt *t* in insgesamt *z* Zeitintervalle zerlegt und die im jeweiligen Zeitintervall gemessenen Wärmeströme aufsummiert, d.h.

$$\int_0^t \dot{Q}\, dt \rightarrow \sum_{i=0}^{i=z} \Delta Q_i\, (\Delta t_i)$$

Zur Realisierung des erfindungsgemäßen Verfahrens werden demnach folgende Meßstellen für die Wärmebilanzierung benötigt:

-    Menge oder Volumen aller Zuläufe zum Polykessel, einschließlich des eingeleiteten Direktdampfes;
-    Temperaturen aller gemischten Zuläufe vor dem Eintritt in den Polykessel;
-    Innentemperatur des Polykessels;
-    Differenztemperatur zwischen Einlauf und Auslauf des Bades des Polykessels;
-    Differenztemperatur zwischen Einlauf und Auslauf des Bades des außenliegenden Wärmetauschers;
-    Durchfluß des Kühlmediums des Bades des Polykessels;
-    Durchfluß des Kühlmediums des Bades des außenliegenden Wärmetauschers;
-    absoluter Innendruck des Polykessels.

Die aus der Wärmebilanz errechnete nicht abgeführte Wärme entspricht demnach den nicht umgesetzten Monomeren. Im Fall einer spontanen adiabaten Reaktion würde diese im Kessel akkumulierte Wärme zu einer Temperaturerhöhung $\Delta T_{AD}$ und daraus resultierend zu einer Erhöhung des Reaktorinnendrucks auf $p_{AD}$ führen. Sicherungskriterium ist dabei, daß beide Änderungen nicht zu einer Überschreitung der zulässigen Grenzwerte für den Reaktor führen dürfen. Als Grenzwerte zieht man üblicherweise die Auslegungsdaten für den Kessel bzw. das Sicherheitsventil heran. Typische Werte liegen etwa bei einer maximal zulässigen Temperatur von 200 °C und einem maximal zulässigen Innendruck von 15 bar.

Der adiabate Temperaturhub $\Delta T_{AD}$ wird dabei aus der nicht abgeführten Wärmemenge $Q_{AD}$ unter Berücksichtigung der Masse $m_i$ und der spezifischen Wärmekapazität $cp_i$ jeder Komponente $i$ im Kessel wie folgt berechnet werden:

$$\Delta T_{AD} = \frac{Q_{AD}}{\sum_i m_i \cdot cp_i}$$

Die maximale, in einem bestimmten Augenblick beim adiabaten Durchgehen erreichbare Temperatur $T_{AD}$ ergibt sich dann als Summe aus der momentanen Reaktorinnentemperatur $T_{RI}$ und dem adiabaten Temperaturhub $\Delta T_{AD}$ zu:

$$T_{AD} = T_{RI} + \Delta T_{AD}.$$

Zur Berechnung des beim adiabaten Durchgehen auftretenden Dampfdrucks kann das ideale Gasgesetz herangezogen werden. Der adiabate Druck ergibt sich dann aus den Dampfdrücken $p_i$ der monomeren Zulaufkomponenten $i$ bei $T_{AD}$, dem Wasserdampfdruck $p_W$ bei $T_{AD}$ und dem Kompressionsdruck $p_K$ des vor Beginn der Polymerisation mit einem Druck $p_0$ in den evakuierten Kessel geleiteten Inertgases (beispielsweise Stickstoff).

$$p_{AD} = \sum_i \left[ p_i(T_{AD}) \cdot \frac{n_i}{\sum_i n_i} \right] + p_w(T_{AD}) + p_K(T_{AD})$$

Dabei ist $n_i$ der Molanteil der momomeren Zulaufkomponente $i$.

Diese Berechnungsmethode ist im Normalfall ausreichend. Bei Komponenten mit hohem Dampfdruck und/oder bei niedrigen Füllständen, was einem großen freien Volumen entspricht, werden jedoch bevorzugt verfeinerte Berechnungsmethoden angewandt, um ein zu frühes Ansprechen der Reaktionsüberwachung zu vermeiden. Große freie Volumina liegen vor allem zu Beginn der Zulauffahrweise vor (beispielsweise bei der Anpolymerisation). Um in dieser Phase den Dampfdruck exakter zu beschreiben, kann das freie Volumen berücksichtigt werden. Die Berechnung des Dampfdrucks erfolgt dann gemäß dem idealen Gasgesetz unter den Annahmen, daß die organische und die wässrigen Phasen nicht mischbar bzw. ideal gemischt sind. Ebenso kann die Löslichkeit der Monomere im Polymer mitberücksichtigt werden.

Mit zunehmendem Füllstand des Reaktors und abnehmendem freien Volumen führt die Berücksichtigung des freien Volumens zu höheren Drücken als real im Reaktor existieren. Bevorzugt wird daher der Gesamtdruck sowohl mit als auch ohne Berücksichtigung des freien Volumens berechnet. Der jeweils kleinere Wert wird dann zur Überprüfung des Abschaltkriteriums herangezogen.

Durch weitergehende, verfeinerte Berechnungsmethoden kann das komplexe Verhalten des Reaktionsgemisches bei realen adiabatischen Polymerisationsreaktionen noch besser beschrieben werden: Dabei wird das adiabate Durchgehen der Reaktion ausgehend von den gemessenen Momentanwerten für Innentemperatur und -druck schrittweise numerisch simmuliert. Dabei kann beispielsweise auch die Löslichkeit der Einsatzstoffe in dem Reaktionsmedium, insbesondere in dem gebildeten Polymer berücksichtigt werden. In jedem Schritt wird die Umsetzung eines durch die Gesamtzahl der Schritte bestimmten Bruchteils der im Reaktor vorhandenen Monomere zu Polymer simmuliert und die Auswirkungen der Freisetzung der entsprechenden Reaktionsenthalpie auf das System berechnet. Derartige Berechnungsmethoden erfordern aber aufgrund ihrer Komplexität sehr leistungsfähige Rechensysteme. Sie zeigen aber beispielsweise, daß der höchste beim adiabaten Durchgehen der Reaktion auftretende Druck $p_{AD}$ bereits vor dem Ende der adiabaten Reaktion, d.h. vor Erreichen der maximalen Temperatur $T_{AD}$, erreicht werden kann und daß anschließend sogar eine Verringerung des Drucks auftreten kann.

Zur Vermeidung von Bedienungsfehlern wird die Wärmebilanzierung bevorzugt voll automatisch gestartet und beendet und die Reaktionsüberwachung automatisch aktiviert und desaktiviert. Im Normalfall besteht daher keine Möglichkeit von außen, in das System einzugreifen. Für besondere Fälle können etwa nach dem Ansprechen der Reaktionsüberwachung unter Beachtung zusätzlicher organisatorischer Maßnahmen und durch Schlüsselschalter die Zuläufe wieder gestartet werden, sofern sämtliche überwachten Parameter wieder im Normalbereich liegen. In den kontinuierlichen Ablauf der Reaktionsüberwachung selbst kann aber auch unter diesen Umständen nicht eingegriffen werden.

7

Der zyklische Ablauf der Wärmebilanzierung gliedert sich in vier Phasen, die durch Erreichen bestimmter Randbedingungen aktiviert werden. Bei einer permanenten Überwachung des Reaktors wird bei vollständig entleertem Reaktor die Wärmebilanzierung initialisiert, d.h. der ursprüngliche Wärmeinhalt $Q_0$ wird gleich Null gesetzt und sämtliche Zähler werden zurückgestellt. Vor Einleitung der Einsatzstoffe beginnt die Messung der Temperaturen und Durchflußmengen und spätestens mit dem Zulauf der Monomere wird die Reaktionsüberwachung aktiviert. Nach Beendigung der Reaktion wird auch die Reaktionsüberwachung beendet. Der Reaktor wird entleert und nach vollständiger Entleerung beginnt der Überwachungszyklus mit der Initialisierung des Systems automatisch von neuem.

Gemäß einer bevorzugten Variante des erfindungsgemäßen Verfahrens wird nicht nur stets der im Fall eines Durchgehens auftretende Maximaldruck $p_{AD}$, sondern auch der momentane Reaktordruck $p_{calc}$ berechnet. Diese Berechnung erfolgt analog dem Berechnungsmodell des adiabaten Drucks $p_{AD}$, nur daß anstelle der maximalen adiabaten Temperatur $T_{AD}$ die aktuell gemessene Reaktortemperatur als Berechnungsgröße tritt. Aufgrund der dem Modell zugrundeliegenden "worst case"-Annahmen sollte der berechnete Reaktordruck stets über dem gemessenen Reaktorinnendruck $p(t)$ liegen, also die Relation $p(t) \leqq p_{calc}(t)$ erfüllt sein. Falls dieses Kriterium nicht erfüllt ist, kann typischerweise davon ausgegangen werden, daß eine Fehlmessung bzw. Abweichungen der verarbeiteten Meßwerte von den realen Meßwerten vorliegen.

Die ständige Berechnung des momentanen Reaktorinnendrucks dient also als Validierung des Modells der Berechnung des maximalen adiabaten Drucks.

Neben der on-line-Validierung des Modells kann durch entsprechende Einbindung in eine Gesamtüberwachung und -prozeßführung sichergestellt werden, daß zu jedem Zeitpunkt auch eine Validierung der eingehenden Daten und Signale erfolgt.

**Patentansprüche**

1. Verfahren zur on-line Überwachung und Steuerung des Monomerenumsatzes bei der Emulsionspolymerisation in einem Reaktor, wobei man

a) einen Initialisierungszeitpunkt $t_0 = 0$ wählt und dem Reaktor für diesen Zeitpunkt einen bestimmten ursprünglichen Wärmeinhalt $Q_0$ zuordnet,

b) ab dem Initialisierungszeitpunkt kontinuierlich die dem Reaktor zugeführte Wärmemenge $Q_{IN}$, die zugeführte Reaktionsenthalpie $Q_{RE}$ und die aus dem Reaktor abgeführte Wärmemenge $Q_{OUT}$ bestimmt,

c) die nicht abgeführte Wärmemenge $Q_{AD}$ gemäß folgender Bilanz berechnet

$$Q_{AD}(t) = Q_0 + Q_{IN}(t) + Q_{RE}(t) - Q_{OUT}(t),$$

d) aus der nicht abgeführten Wärmemenge $Q_{AD}(t)$ und der momentanen Innentemperatur T(t) des Reaktors die im Fall einer spontanen adiabaten Reaktion maximal auftretende Innentemperatur $T_{AD}$ berechnet, und

e) wenn die berechnete maximale Innentemperatur $T_{AD}$ die momentane Innentemperatur T(t) des Reaktors um einen bestimmten Wert übersteigt, Maßnahmen einleitet, die ein weiteres Ansteigen der nicht abgeführten Wärmemenge $Q_{AD}$ verhindern.

2. Verfahren gemäß Anspruch 1, **dadurch gekennzeichnet, daß** man ein weiteres Ansteigen der nicht abgeführten Wärmemenge $Q_{AD}$ durch eine oder mehrere der folgenden Maßnahmen verhindert:

- Drosseln der Monomerenzufuhr,
- Verstärken der Reaktorkühlung,
- Erhöhen der Inititiatorzugabe.

3. Verfahren gemäß einem der Ansprüche 1 oder 2, **dadurch gekennzeichnet, daß** man die Wärmemengen $Q_{IN}$, $Q_{RE}$ und $Q_{OUT}$ mittels Temperatur- und Durchflußmengenmessungen in den Zu- und Abläufen des Reaktor, sowie in den Kühlmittelkreisläufen bestimmt.

4. Verfahren gemäß einem der Ansprüche 1 bis 3, **dadurch gekennzeichnet, daß** man außerdem den bei der maximalen Innentemperatur $T_{AD}$ in dem Reaktor herrschenden maximalen Innendruck $p_{AD}$ berechnet.

5. Verfahren gemäß einem der Ansprüche 1 bis 5, **dadurch gekennzeichnet, daß** man eine weitere Zufuhr von Monomeren in den Reaktor verhindert, wenn die berechnete maximale Innentemperatur $T_{AD}$ und/oder der berechnete maximale Innendruck $p_{AD}$ vorgegebene reaktorspezifische Grenzwerte überschreiten.

6. Verfahren gemäß einem der Ansprüche 1 bis 5, **dadurch gekennzeichnet, daß** man den Initialisierungszeitpunkt $t_0$ dann wählt, wenn der Reaktor vollständig entleert ist, und daß man dem ursprünglichen Wärmeinhalt $Q_0$ den Wert Null zuordnet.

7. Verfahren gemäß Anspruch 6, **dadurch gekennzeichnet, daß** die Initialisierung des Verfahrens automatisch durchgeführt wird.

8. Verfahren gemäß einem der Ansprüche 4 bis 7, **dadurch gekennzeichnet, daß** man zur Validierung des Überwachungsverfahrens den tatsächlichen Reaktorinnendruck $p(t)$ mißt und die Einhaltung der Relation

$$p(t) \leq p_{calc}(t)$$

kontinuierlich überprüft, wobei $p_{calc}$ der aus der momentanen Reaktorinnentemperatur berechnete Druck ist.

9. Verfahren gemäß einem der Ansprüche 3 bis 8, **dadurch gekennzeichnet, daß** man Temperaturen, Drücke und Durchflußmengen wenigstens teilweise redundant mißt und durch gegenseitigen Vergleich der redundanten Größen eine kontinuierliche Validierung der Eingangsgrößen durchführt.

10. Verfahren gemäß einem der vorhergehenden Ansprüche, **dadurch gekennzeichnet, daß** man das Emulsionspolymerisationsverfahren semi-kontinuierlich oder kontinuierlich durchführt.

**Claims**

1. A method of on-line monitoring and control of monomer conversion in emulsion polymerization in a reactor, which comprises

   a) selecting an initialization time to = 0 and assigning a particular original heat content $Q_0$ to the reactor for this point in time,
   b) as from the initialization time, continuously determining the heat $Q_{IN}$, introduced into the reactor, the reaction enthalpy $Q_{RE}$ introduced and the heat $Q_{OUT}$ removed from the reactor,
   c) calculating the heat which has not been removed $Q_{AD}$ according to the following balance

$$Q_{AD}(t) = Q_0 + Q_{IN}(t) + Q_{RE}(t) - Q_{OUT}(t),$$

   d) calculating the maximum internal temperature $T_{AD}$ which occurs in the case of a spontaneous adiabatic reaction from the heat which has not been removed $Q_{AD}(t)$ and the instantaneous internal temperature T(t) of the reactor and,
   e) if the calculated maximum internal temperature $T_{AD}$ exceeds the instantaneous internal temperature T(t) of the reactor by a particular margin, implementing measures which prevent a further rise in the heat which is not removed $Q_{AD}$.

2. The method according to claim 1, wherein a further rise in the heat which has not been removed $Q_{AD}$ is prevented by one or more of the following measures:

   - throttling back of the monomer feed,
   - increasing reactor cooling,
   - increasing the initiator addition.

3. The method according to claim 1 or 2, wherein the heat quantities $Q_{IN}$, $Q_{RE}$ and $Q_{OUT}$ are determined by means of temperature and mass flow measurements in the inflow and outflow lines of the reactor and in the coolant circuits.

4. The method according to any of claims 1 to 3, wherein the maximum internal pressure $p_{AD}$ prevailing in the reactor at the maximum internal temperature $T_{AD}$ is additionally calculated.

5. The method according to any of claims 1 to 5, wherein further introduction of monomers into the reactor is prevented if the calculated maximum internal temperature $T_{AD}$ and/or the calculated maximum internal pressure $p_{AD}$ exceed prescribed reactor-specific limit values.

6. The method according to any of claims 1 to 5, wherein the initialization time $t_0$ is selected when the reactor is completely empty and the original heat content $Q_0$ is assigned the value zero.

7. The method according to claim 6, wherein the initialization of the method is carried out automatically.

8. The method according to any of claims 4 to 7, wherein the monitoring method is validated by measuring the actual internal pressure in the reactor $p(t)$ and continuously checking adherence to the relationship

$$p(t) \leq p_{calc}(t)$$

where $p_{calc}$ is the pressure calculated from the instantaneous internal temperature in the reactor.

9. The method according to any of claims 3 to 8, wherein measurement of temperatures, pressures and mass flows are carried out with at least partial redundancy and a continuous validation of the input parameters is carried out by comparison of the redundant parameters.

10. The method according to any of the preceding claims, wherein the emulsion polymerization process is carried out semicontinuously or continuously.

**Revendications**

1. Procédé de surveillance et de commande en ligne de la conversion de monomère lors de la polymérisation en émulsion dans un réacteur, dans lequel

a) on sélectionne un moment d'initialisation $t_0 = 0$ et on affecte au réacteur pour ce moment une capacité calorifique initiale $Q_0$ déterminée,
b) à partir du moment d'initialisation, on détermine de manière continue la quantité de chaleur amenée au réacteur $Q_{IN}$, l'enthalpie de réaction amenée $Q_{RE}$ et la quantité de chaleur dissipée du réacteur $Q_{OUT}$,
c) on calcule la quantité de chaleur non dissipée $Q_{AD}$ conformément à l'équation suivante :

$$Q_{AD}(t) = Q_0 + Q_{IN}(t) + Q_{RE}(t) - Q_{OUT}(t),$$

d) à partir de la quantité de chaleur non dissipée $Q_{AD}(t)$ et de la température interne momentanée $T(t)$ du réacteur, on calcule la température interne maximale $T_{AD}$ qui apparaît dans le cas d'une réaction adiabatique spontanée, et
e) lorsque la température interne maximale calculée $T_{AD}$ dépasse la température interne momentanée T(t) du réacteur d'une valeur déterminée, on déclenche des mesures qui empêchent une poursuite de la croissance de la quantité de chaleur non dissipée $Q_{AD}$.

2. Procédé suivant la revendication 1, **caractérisé en ce qu'**on empêche une poursuite de croissance de la quantité de chaleur non dissipée $Q_{AD}$ par une ou plusieurs des mesures suivantes :

- une diminution de l'amenée de monomère,
- un renforcement du refroidissement du réacteur,
- une augmentation de l'addition d'amorceur.

3. Procédé suivant l'une des revendications 1 ou 2, **caractérisé en ce qu'**on détermine les quantités de chaleur $Q_{IN}$,

$Q_{RE}$ et $Q_{OUT}$ au moyen de mesures de température et de débit dans les entrées et sorties du réacteur ainsi que dans les circuits d'agent réfrigérant.

**4.** Procédé suivant l'une des revendications 1 à 3, **caractérisé en ce qu'**on calcule en outre la pression interne maximale $\rho_{AD}$ qui règne dans le réacteur lors de la température interne maximale $T_{AD}$.

**5.** Procédé suivant l'une des revendications 1 à 4, **caractérisé en ce qu'**on empêche une poursuite d'amenée de monomère dans le réacteur lorsque la température interne maximale calculée $T_{AD}$ et/ou la pression interne maximale calculée $p_{AD}$ dépassent des valeurs limites spécifiques au réacteur, prédéterminées.

**6.** Procédé suivant l'une des revendications 1 à 5, **caractérisé en ce qu'**on sélectionne le moment d'initialisation $t_0$ lorsque le réacteur est totalement vidé et **en ce qu'**on affecte à la capacité calorifique initiale $Q_0$ la valeur de zéro.

**7.** Procédé suivant la revendication 6, **caractérisé en ce que** l'initialisation du procédé est effectuée de manière automatique.

**8.** Procédé suivant l'une des revendications 4 à 7, **caractérisé en ce que**, pour la validation du procédé de surveillance, on mesure la pression interne effective du réacteur $p(t)$ et on contrôle le maintien de la relation :

$$p(t) \leq p_{calc}(t)$$

de manière continue, $p_{calc}$ étant la pression calculée à partir de la température interne momentanée du réacteur.

**9.** Procédé suivant l'une des revendications 3 à 8, **caractérisé en ce qu'**on mesure de manière au moins partiellement redondante des températures, des pressions et des débits et, par une comparaison mutuelle des grandeurs redondantes, on effectue une validation continue des grandeurs d'entrée.

**10.** Procédé suivant l'une des revendications précédentes, **caractérisé en ce qu'**on effectue de manière semi-continue ou continue le procédé de polymérisation en émulsion.

Fig.